# EUROPÄISCHE PATENTSCHRIFT

(11) **EP 1 733 904 B1**
(45) Veröffentlichungstag und Bekanntmachung des Hinweises auf die Patenterteilung: **01.09.2010**
(21) Anmeldenummer: 06012334.6
(22) Anmeldetag: 14.06.2006
(51) Int. Cl.: B60H 1/00

(54) **Klimaanlage mit Kaltluft-Bypass für ein Kraftfahrzeug**
Air conditioning unit for a vehicle comprising a cold-air bypass
Dispositif de climatisation pour véhicule comprenant une dérivation à air froid

(30) Priorität: 17.06.2005 DE 102005028205
(43) Veröffentlichungstag der Anmeldung: 20.12.2006
(73) Patentinhaber: Behr GmbH & Co. KG, 70469 Stuttgart (DE)
(72) Erfinder: Augull, Michael, Dipl.-Ing.(FH), 71088 Holzgerlingen (DE); Berndt, Ralf, 71254 Ditzingen-Schöckingen (DE); Burkhardt, Carsten, Dipl.-Ing.(FH), 74653 Künzelsau (DE); Roth, Michael, Dipl.-Ing., 70193 Stuttgart (DE); Schweizer, Gebhard, Dipl.-Ing., 71229 Leonberg (DE)

(56) Entgegenhaltungen:
- DE-A1- 10 261 036
- DE-C1- 3 826 182
- DE-C1- 19 701 875
- DE-C1- 19 954 972
- US-A1- 2005 077 038

## Beschreibung

Die Erfindung betrifft eine Klimaanlage mit Kaltluft-Bypass gemäß dem Oberbegriff des Anspruchs 1.

Üblicherweise sind Kaltluft-Bypässe nur bei sehr hochwertigen, mehrzonigen Klimaanlagen vorgesehen, um den Komfort der Insassen, insbesondere im Frontbereich, zu verbessern. Der Kaltluft-Bypass dient hierbei der Temperaturabsenkung der durch die Mitteldüse austretenden Luft, da ein entsprechendes Temperaturgefälle durch die Insassen als angenehm empfunden wird. Hierbei können auch Kaltluft-Bypässe für die einzelnen Klimazonen vorgesehen sein.

Das Vorsehen von in das Klimaanlagengehäuse integrierten Kaltluftkanälen zur Erzeugung einer Temperaturschichtung ist beispielsweise in der DE 102 61 036 A1 beschrieben. Hierbei ist durch einen separat ausgebildeten Schichtungskanal kühle Luft in den Bereich der Fondbelüftung führbar. Der Schichtungskanal greift kalte Luft nach dem Verdampfer, hinter einer Temperaturklappe ab und leitet dieselbe direkt in den Fondbereich.

Aus der FR 2 789 629 B1 ist eine andere Kraftfahrzeugklimaanlage mit einem Kaltluft-Bypass bekannt, wobei die Kaltluft direkt hinter dem Verdampfer abgegriffen und einem anderen, der Belüftung dienenden Luftkanal beigemischt wird. Der Gesamtluftstrom wird hierbei über eine endseitig des Bypasses angebrachte Klappe, welche sich auch über den restlichen Strömungsquerschnitt des der Innenraumbelüftung dienenden Luftkanals erstreckt, geregelt.

Aus der DE 199 54 972 C1 ist als nächster Stand der Technik eine Heizungs- oder Klimaanlage für eine Fahrgastzelle von Fahrzeugen bekannt, die einen Gehäusekasten aufweist, in dem hinter einem luftdurchströmbaren Wärmetauscher mindestens ein Luftmischraum mit einem in seinem oberen Bereich angeordneten Luftauslass zur Belüftung der Mittelebene der Fahrgastzelle und mindestens ein längs einer oberen Kastenwand über den Wärmetauscher hinweg in einem oberen Bereich des Luftmischraums geführter Kaltluft-Bypass ausgebildet sind. Hierbei ist der Kaltluft-Bypass in die Klimaanlage, d.h. in das Luftführungsgehäuse derselben, integriert ausgebildet

Die Verwendung von Mischklappen, welche einen Luftstrom in einem Mehrzahl von Teilluftströmen verteilt, um eine gleichmäßigere Temperaturverteilung zu erreichen, ist im Falle einer Temperaturklappe, die im Kaltluftkanal einer Klimaanlage angeordnet ist, aus der EP 1 445 133 A2 bekannt. Hierbei bietet die Klappe unterschiedliche Strömungswege für die vom Heizer kommende Warmluft und die am Heizer vorbeiströmende, direkt vom Verdampfer kommende Kaltluft, welche eine gekreuzte Strömung einer Mehrzahl von kalten und warmen Teilluftströmen ermöglicht, so dass die Größe des Mischraumes verringert werden kann.

Derartige Klimaanlagen lassen jedoch noch Wünsche offen.

Es ist daher Aufgabe der Erfindung, eine verbesserte Klimaanlage mit Kaltluft-Bypass zur Verfügung zu stellen.

Diese Aufgabe wird gelöst durch eine Klimaanlage mit Kaltluft-Bypass mit den Merkmalen des Anspruchs 1. Vorteilhafte Ausgestaltungen sind Gegenstand der Unteransprüche.

Erfindungsgemäß ist eine Klimaanlage, insbesondere für ein Kraftfahrzeug, vorgesehen, mit einem Gehäuse, in welchem Luftkanäle ausgebildet sind, und im Gehäuse angeordneten Verdampfer und Heizer, wobei ein mittels einer Klappe geregelter Kaltluft-Bypass vorgesehen ist, der nach dem Verdampfer abzweigt. Die den Luftstrom durch den Kaltluft-Bypass regelnde Klappe ist am Ende des Kaltluft-Bypasses angeordnet, und teilt den aus dem Kaltluft-Bypass kommenden Luftstrom zumindest in vollständig geöffnetem Zustand der Klappe in mehrere Teilluftströme auf, so dass eine verbesserte Vermischung der warmen und kalten Luft ermöglicht wird. Der Luftaustritt aus dem Kaltluft-Bypass erfolgt ― bedingt durch die Klappe - in Form mehrerer Teilströme, insbesondere bevorzugt sind zwei bis fünf, besonders bevorzugt drei, Teilströme, in welche die vom Kaltluft-Bypass kommende Luft aufgeteilt und der temperierten Luft, insbesondere der Luft, welche zur Mitteldüse geleitet wird, zugeführt wird. Durch die Aufteilung in einzelne Teilströme kann auch auf kurzen Strecken eine ausreichende Luftvermischung erfolgen, um ein relativ gleichmäßiges Temperaturprofil der ausströmenden Luft an der nachgeordneten Düse zu ermöglichen, wodurch der Komfort im Fahrzeuginnenraum erhöht wird.

Der von der Klappe geregelte Kaltluftstrom wird vorzugsweise in den Verteiler- und Mischraum der Klimaanlage eingeiertet, insbesondere bevorzugt kurz vor den Klappen, welche den Luftaustritt zu den Mittel- und Seitendüsen regeln. Ebenfalls kann der Kaltluftstrom vom Kaltluft-Bypass auch an weiter hinten liegender Stelle in die Luftkanäle zu den Mittel- und Seitendüsen eingeleitet werden. Eine am Ende des Kaltluft-Bypasses angeordnete Klappe ist insbesondere in Hinblick auf beschränkte Bauraumverhältnisse hilfreich. Die Regelung der Klappe - sofern vorhanden - kann automatisch in Abhängigkeit eines Temperatursensors und/oder manuell erfolgen.

Die Klappe ist vorzugsweise an einer Einmündung des Kaltluft-Bypasses zwischen einem Defrostauslass und einem Belüftungsauslass, insbesondere zur Mittel- und/oder Seitendüse, angeordnet, wobei der Defrostauslass in normaler Strömungsrichtung der temperierten Luft vor dem Belüftungsauslass angeordnet ist. Diese Anordnung ermöglicht ― trotz des Einströmens der Luft aus dem Kaltluft-Bypass in den Mischraum - eine gezielte Ausleitung in Richtung Mittel-/Seitendüsen.

Vorzugsweise weist die Klappe eine Wand auf, welche in geschlossener Stellung der Klappe eine Öffnung im Gehäuse zu einem Luftkanal, insbesondere bevorzugt zu einer Seitendüse, verschließt und im geöffneter Stellung der Klappe die Öffnung freigibt, so dass die Kaltluft vom Kaltluft-Bypass gleichmäßig auf die Mittel- und Seitendüse verteilt werden kann und dadurch rechts und links in einer Zone, d.h. auf der Fahrer- oder auf der Beifahrerseite, kein wesentlicher Temperaturunterschied der ausströmenden Luft entsteht.

Die Klappe unterteilt in geöffneter Stellung den Kaltluftstrom in mindestens zwei, insbesondere bevorzugt in drei, Teilluftströme, welche dem Verteiler- und Mischraum der Klimaanlage zugeführt werden, und welche aus demselben bei geöffneter Belüftungsklappe - gemeinsam mit temperierter Luft aus dem Verteiler- und Mischraum - in den entsprechenden, zum Fahrzeuginnenraum führenden Luftkanal gelangen.

Vorzugsweise ist im Falle einer zwei- oder mehrzonigen Klimaanlage ein geteilter Kaltluft-Bypass oder zwei Kaltluft-Bypässe vorgesehen, wobei der eine Teil oder Kaltluft-Bypass der Fahrerseite und der andere Teil oder Kaltluft-Bypass der Beifahrerseite zugeordnet ist, und jeweils eine Klappe zur Regelung des entsprechenden Kaltluftstroms vorgesehen ist.

Die Klimaanlage weist erfindungsgemäß eine Mischklappe auf, die eine erste, kaltluftanströmseitige Klappenfläche mit Öffnungen, welche die Einströmöffnungen für die Kaltluft vom Kaltluft-Bypass in die Klappe bilden, und in einem Winkel, insbesondere von 60° bis 120°, insbesondere bevorzugt von ca. 90°, versetzt hierzu eine zweite, zweimal unterbrochene, kaltluftabströmseitige Klappenfläche auf. Die Öffnungen in der ersten Klappenfläche sind vorzugsweise in endseitig offenen Kanälen bis zur zweiten Klappenfläche weitergeführt, wobei die Kanäle in axialer Richtung der Klappe durch sich in radialer Richtung erstreckende, kreissegmentartige Wände begrenzt sind und in radialer Richtung das Gehäuse die Begrenzung bildet. Dies ermöglicht eine relativ einfache Klappengeometrie bei guten Eigenschaften in Hinblick auf die Vermischung der Kalt- und Warmluft.

Besonders bevorzugt ist bei der erfindungsgemäßen Klimaanlage das Gehäuse mit einem Kaltluft-Bypass versehbar, der als separates Teil ausgebildet ist. Vorteilhafterweise ist der Kaltluft-Bypass auf der Außenseite des Gehäuses anbringbar. Dies ermöglicht bei entsprechend vorbereiteter Ausgestaltung des Luftführungsgehäuses auf relativ einfache Weise, eine Klimaanlage ohne Kaltluft-Bypass durch Öffnen der entsprechenden Wandbereiche und Anbau des Kaltluft-Bypasses mit entsprechenden Klappen und Stellvorrichtungen, in eine Klimaanlage mit Kaltluft-Bypass umzuwandeln, wobei die Abgriffstelle relativ flexibel wählbar ist, so dass bei einer Klimaanlage auch verschiedene Abgriffvarianten möglich sind. Hierbei ist bevorzugt der Wandbereich, in dem der Kaltluft-Bypass vorsehbar ist, derart strömungstechnisch ausgestaltet, dass sich die Leistungsdaten der Klimaanlage durch die bauliche Veränderung nicht oder nur unwesentlich ändern, so dass zudem auf eine vollständige Neuauslegung (wie Akustik, Luftmenge, -verteilung, Regelkurven) der Klimaanlage mit Kaltluft-Bypass einschließlich der hierfür erforderlichen Berechnungen in der Regel verzichtet werden kann. Somit können Klimaanlagen mit und ohne Kaltluft-Bypass mit einem Werkzeug (Spritzgußform) hergestellt werden. Gegebenenfalls ist ein Einsatz für die unterschiedliche Ausgestaltung im Bereich des Auslasses zum Kaltluft-Bypass und zum Einlass in den entsprechenden Luftkanal beim Werkzeug erforderlich. Jedoch lassen sich die Herstellungskosten dadurch, dass ein Werkzeug für Klimaanlagen mit und ohne Kaltluft-Bypass verwendet werden kann und entsprechend die Stückzahlen je Werkzeug deutlich größer sind als bei unterschiedlichen Werkzeugen für beide (oder gegebenenfalls weitere) Klimaanlagentypen, auf Grund der relativ hohen Werkzeugkosten und der relativ geringen Stückzahlen für Klimaanlage mit Kaltluft-Bypass deutlich senken.

Das Gehäuse der Klimaanlage weist vorzugsweise bei fehlendem Kaltluft-Bypass eine Sollbruchstelle im Bereich des Auslasses für den Kaltluft-Bypass auf.

Die Herstellung des Gehäuses wie auch des getrennt ausgebildeten Kaltluft-Bypasses erfolgt bevorzugt mittels Spritzgießens.

Im Folgenden wird die Erfindung anhand eines Ausführungsbeispiels mit mehreren Varianten, teilweise unter Bezugnahme auf die Zeichnung, im Einzelnen erläutert. In der Zeichnung zeigen:
- Fig. 1: eine schematische, geschnittene Ansicht einer Klimaanlage mit Kaltluft-Bypass,

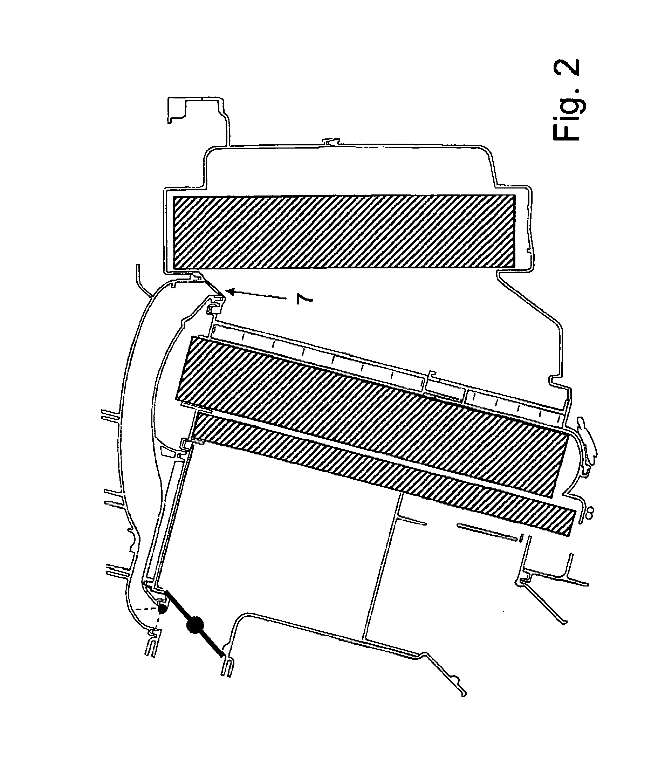

- Fig. 2: eine Fig. 1 entsprechende Klimaanlage, bei welcher der Kaltluftauslass herstellungsbedingt geschlossen ist, jedoch der Kaltluft-Bypass angebaut dargestellt ist,

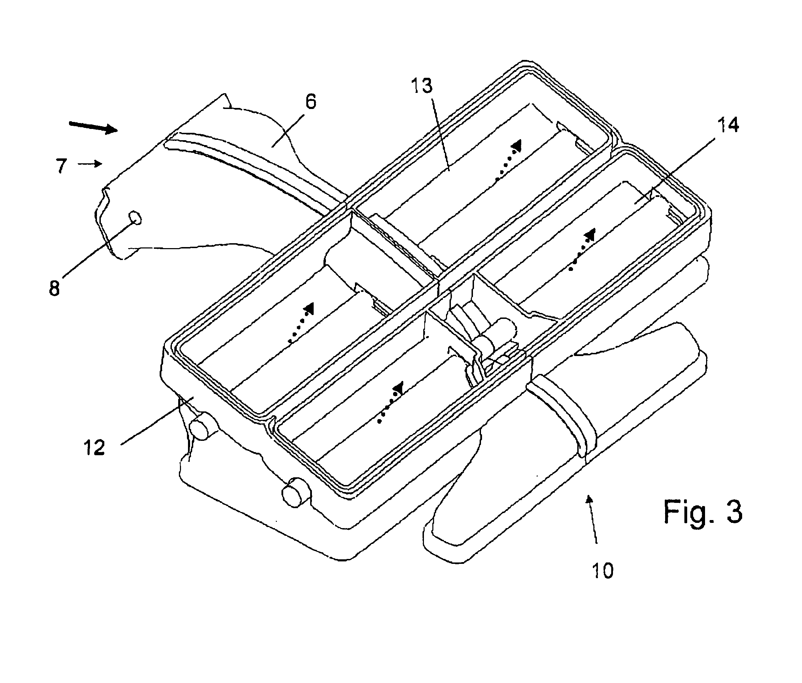

- Fig. 3: den Kaltluft-Bypass mit einem Kanalaufsatz Defrost/indirekte Belüftung für eine mehrzonige Klimaanlage,

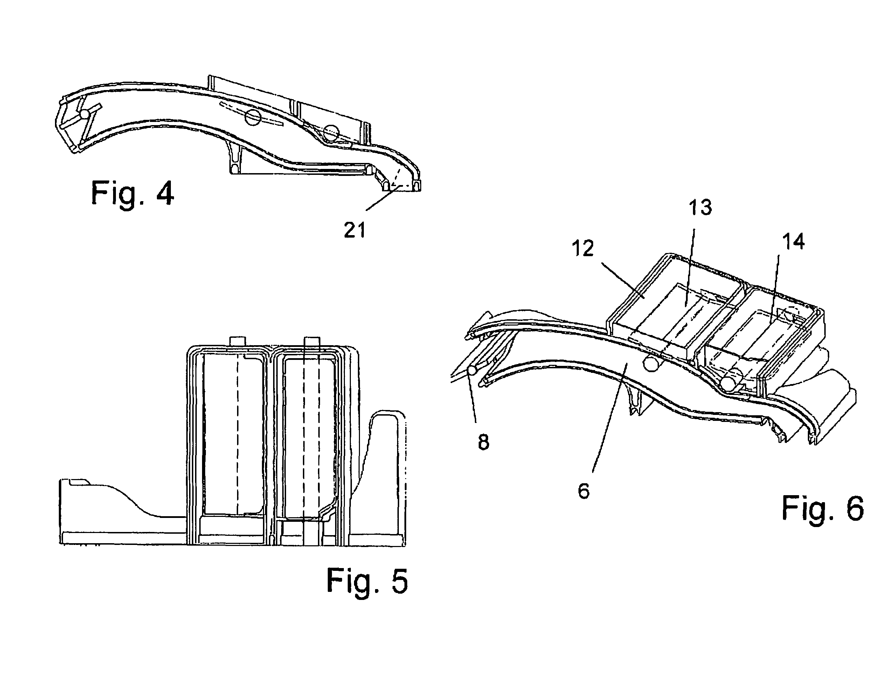

- Fig. 4: eine Seitenansicht des Kaltluft-Bypasses mit Kanalaufsatz von Fig. 3,
- Fig. 5: eine Draufsicht auf den Kaltluft-Bypass mit Kanalaufsatz von Fig. 3,
- Fig. 6: eine ISO-Ansicht des Kaltluft-Bypasses mit Kanalaufsatz von Fig. 3,
- Fig. 7: eine perspektivische Ansicht eines Kaltluft-Bypasses gemäß einer Variante,
- Fig. 8: eine andere perspektivische Ansicht des Kaltluft-Bypasses von Fig. 7,
- Fig. 9: eine Schnittdarstellung einer Klimaanlage mit dem Kaltluft-Bypass von Fig. 7 in der Betriebsstellung "Kaltluft-Bypass offen",
- Fig. 10: eine Schnittdarstellung einer Klimaanlage mit dem Kaltluft-Bypass von Fig. 7 in der Betriebsstellung "Kaltluft-Bypass geschlossen",
- Fig. 11: eine perspektivische Ansicht der Mitteldüse, wie sie am Ende des Kaltluft-Bypasses der Figuren 7 bis 10 angeordnet ist, mit Blick auf die Eintrittsseite der Kaltluft,
- Fig. 12: eine andere perspektivische Ansicht der Mitteldüse von Fig. 11, gesehen von der Austrittsseite der Kaltluft her.

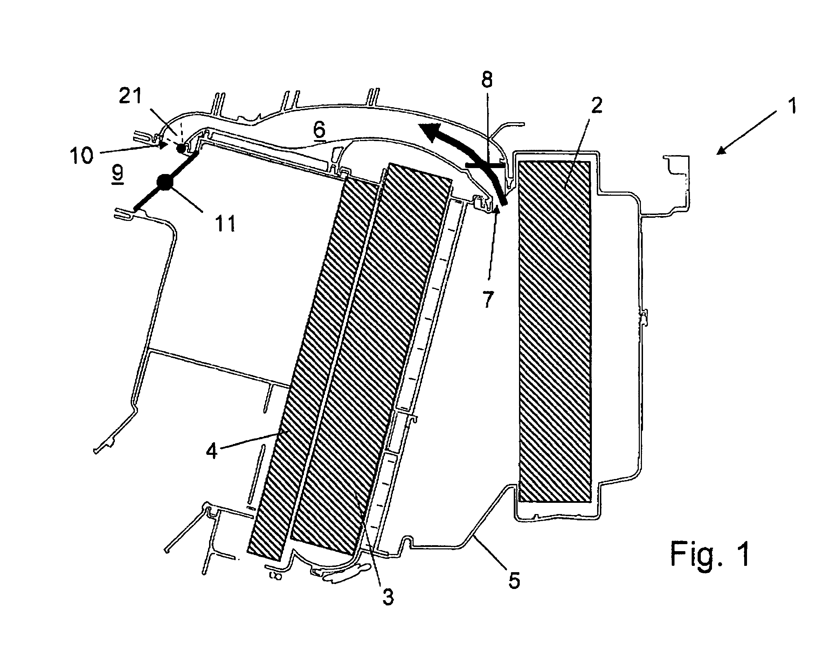

In Fig. 1 ist eine dreizonige Klimaanlage 1 mit einem Verdampfer 2 und einem Heizer 3 mit elektrischem Zuheizer 4, die in einem mehrteiligen Gehäuse 5 mit Trennwänden angeordnet sind, dargestellt. Im Bereich vor oder nach dem Heizer 3 befindet sich eine nicht dargestellte Klappenanordnung mit einer oder mehreren Klappen, zur Einstellung der Temperatur der dem Innenraum zuzuführenden Luft Vorliegend handelt es sich hierbei um eine mehrzonige Klimaanlage bei der im Frontbereich sowohl auf der Fahrerseite als auch auf der Beifahrerseite über die entsprechende Mitteldüse vom Verdampfer 2 kommende Kaltluft zuführbar ist, wodurch eine gelegentlich als angenehm empfundene Temperaturdifferenz zwischen einzelnen Luftausströmdüsen herstellbar ist. Am Gehäuse 5 ist, in Fig. 1 oben dargestellt, hierfür ein Kaltluft-Bypass 6 angebaut.

Um Kaltluft aus dem Gehäuse 5 nach dem Verdampfer 2 und vor dem Heizer 3 für eine Temperaturabsenkung der aus den Mitteldüsen strömenden Luft abzuzweigen, ist das Gehäuse 5 mit einem Auslass 7 versehen, welcher gleichzeitig den Einlass für die Kaltluft in den Kaltluft-Bypass 6 bildet. Im Bereich des Einlasses ist im Kaltluft-Bypass 6 vorliegend eine Klappe 8 zur Regelung der den Kaltluft-Bypass 6 durchströmenden und dem Luftkanal 9 zur Mitteldüse zuzuführenden Kaltluft angeordnet, wobei die Klimaanlage 1 ihrer Funktion nach im geschlossenen Zustand der Klappe 8 einer entsprechenden Klimaanlage ohne Kaltluft-Bypass entspricht. Die Klappe 8 kann ― wie an späterer Stelle näher erläutert ist - auch entfallen. Der Kaltluft-Bypass 6 verläuft auf der Außenseite des Gehäuses 5 entlang und mündet vorliegend in einen Luftkanal 9 zur Mitteldüse ein, wobei diese Einmündungsstelle auch als Auslass 10 zum Luftkanal 9 bezeichnet wird. Alternativ kann die Einmündungsstelle auch im Verteiler- und Mischraum der Klimaanlage 1 angeordnet sein, insbesondere bevorzugt, wie anhand einer Variante des Ausführungsbeispiels an späterer Stelle beschrieben, zwischen dem Defrostauslass und dem Belüftungsauslass,

Im Luftkanal 9, der von einem Mischraum der Klimaanlage 1 abzweigt, in welchem Luft, die direkt vom Verdampfer 2 kommt, und Luft, die noch den Heizer 3 und Zuheizer 4 durchströmt hat, vermischt wird, ist vor dem Einmünden des Kaltluft-Bypasses 6 eine Klappe 11 angeordnet.

Somit kann durch die Mitteldüse im Bedarfsfall auch ausschließlich durch den Kaltluft-Bypass 6 strömende, direkt vom Verdampfer 2 kommende, kalte Luft in das Fahrzeuginnere gelangen. Bei geschlossener Klappe 11 ist jedoch der Volumenstrom geringer als wenn die kalte Luft vom Verdampfer 2 um den Heizer 3 und Zuheizer 4 herum über den Mischraum und durch die offene Klappe 11 strömt. Auf diese Weise lassen sich unterschiedliche Einströmtemperaturen an Mitteldüse und den anderen Düsen o. ä. realisieren. Im Falle einer automatischen Betätigung der Klappe 8 ist mindestens ein Temperatursensor im Kaltluft-Bypass 6 vorgesehen, der eine vorgegebene Temperaturabsenkung der durch die Mitteldüse ausströmenden Temperatur ermöglicht. Jedoch ist auch eine manuelle Regelung ohne Temperatursensor oder unter Umgehung der Regelungsautomatik möglich.

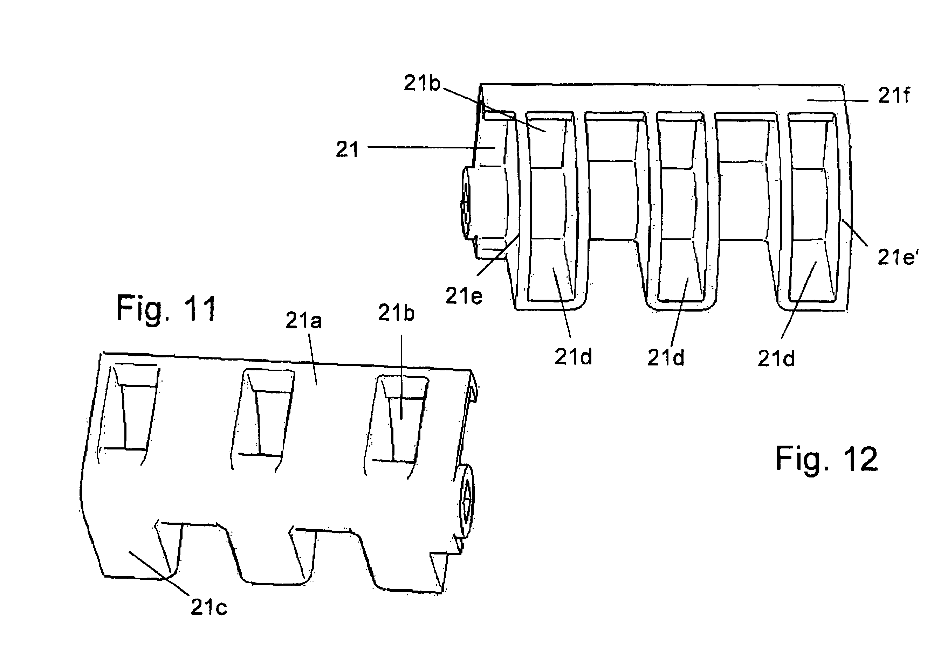

Ferner ist ― in Fig. 1 sehr schematisch angedeutet ― eine Klappe 21 am Kanalende vorgesehen, die jedoch in den Figuren 11 und 12 im Detail dargestellt und unter Bezugnahme auf die an späterer Stelle beschriebene Variante des Ausführungsbeispiels näher erläutert ist. Diese Klappe 21 dient der Aufteilung der Kaltluft in drei Teilluftströme, die der temperierten Luft des Luftkanals 9 zugeführt wird, und einen Teilluftstrom, der über eine nicht näher dargestellte Öffnung dem entsprechenden Luftkanal zur Seitendüse zugeführt wird. Dabei wird insbesondere auf Grund der Mehrzahl von Teilluftströmen eine bessere Vermischung der kalten und warmen Luft im Luftkanal 9 zur Mitteldüse bewirkt, welcher in der Regel sehr kurz sein wird, so dass die unterschiedliche temperierte Luft sich ohne die Aufteilung in Teilluftströme oder andere Maßnahmen nicht vollständig bis zum Austritt in den Fahrzeuginnenraum vermischen wird.

Auf Grund des Vorsehens der Klappe 21 kann prinzipiell die Klappe 8 am Eintritt in den Kaltluft-Bypass 6 auch entfallen, kann aber bei entsprechender Ausgestaltung Vorteile in Hinblick auf Geräuschbildungen am Lufteintritt bilden, insbesondere bei geschlossenem Kaltluft-Bypass 6.

Der Kaltluft-Bypass 6 ist gemäß dem in der Zeichnung dargestellten Ausführungsbeispiel derart ausgebildet, dass ein weiterer Teil eines Kanalaufsatzes 12 von außen auf das Gehäuse 5 und, von dem vorliegend der Kaltluft-Bypass 6 ein Teil ist, aufgesetzt werden kann, welcher einen Teil der Luftkanäle mit entsprechenden Klappen zum Defrostaustritt und für die indirekte Belüftung bildet. Der Luftkanal zum Defrostaustritt ist mit dem Bezugszeichen 13, der Luftkanal für die indirekte Belüftung mit dem Bezugszeichen 14 bezeichnet.

Der Kanalaufsatz 12 ist vorliegend derart ausgebildet, dass eine Anbringung am Gehäuse 5 auch ohne Kaltluft-Bypass 6 möglich ist, womit auch die Klappe 21 der Klimaanlage entfällt. Im Falle eines Kaltluft-Bypasses 6 wird dieser durch den Kanalaufsatz 12 mit gesichert.

Im Falle einer noch einfacheren Klimaanlage kann neben dem Kaltluft-Bypass 6 auch der Kanalaufsatz 12 entfallen und die entsprechenden Öffnungen im Gehäuse 5 mittels entsprechender Verschlussteile (oder fest mit Sollbruchstellen) verschlossen sein, so dass auch für diese einfachste Variante der Klimaanlage die gleiche Spritzgußform verwendet werden kann.

Um einen einfachen Umbau des Werkzeugs zu ermöglichen, der keine weiteren Verstellarbeüen, insbesondere der benötigten Materialmenge, hervorruft, ist im Bereich des Auslasses 7 zum Kaltluft-Bypass 6 in der Spritzgußform ein auswechselbarer Einsatz vorgesehen, mit welchem in einem Fall der Auslass 7 freigelassen wird und die für die Anbringung des Kaltluft-Bypasses 6 erforderlichen Geometrien auf der Gehäuseaußenseite ausgebildet werden, und im anderen Fall, nämlich bei einer Klimaanlage ohne Kaltluft-Bypass, im entsprechenden Bereich eine durchgehende Wand vorgesehen wird.

Alternativ kann der Auslass 7 derart verschlossen ausgebildet sein, dass im Bedarfsfall, d.h. wenn ein Kaltluft-Bypass angeschlossen werden soll, ein Öffnen auf einfache Weise möglich ist. In diesem Fall ist nur eine Spritzgußform ohne Einsatz erforderlich, jedoch ein zusätzlicher Arbeitsgang, nämlich das Herausbrechen oder auf andere Weise Entfernen des den Auslass verschließenden Wandbereichs. Um das Entfernen des Wandbereichs zu erleichtern, kann eine entsprechende Sollbruchstelle vorgesehen sein. Vorteil in diesem Fall ist, dass eine Klimaanlage relativ einfach und kostengünstig nachgerüstet werden kann, da das Gehäuse hierfür vorbereitet ist und die Klimaanlage selbst nur relativ wenig Umbauarbeiten in Verbindung mit der Betätigung und Regelung der zusätzlichen Klappe im Kaltluft-Bypass erfordert.

Als weitere Alternative mit einer einzigen Spritzgußform für das Gehäuse kann die Klappe, die im Falle eines Kaltluft-Bypasses vorgesehen ist, am Gehäuse anbringbar sein, wobei die Klappe im Falle eines Fehlens des Kaltluft-Bypasses fest geschlossen angebracht wird, oder durch ein entsprechendes Verschlussteil ersetzt wird.

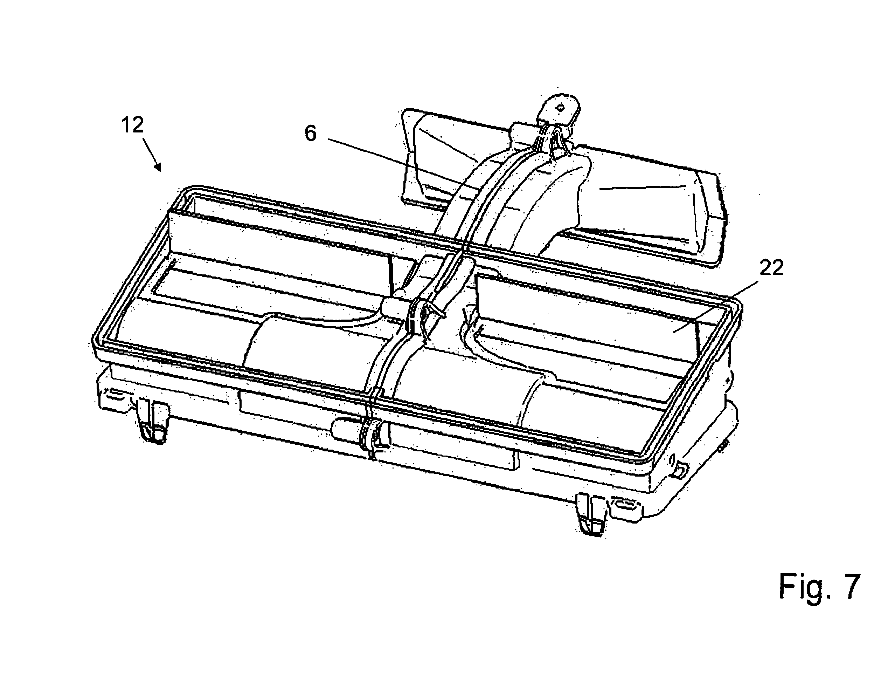

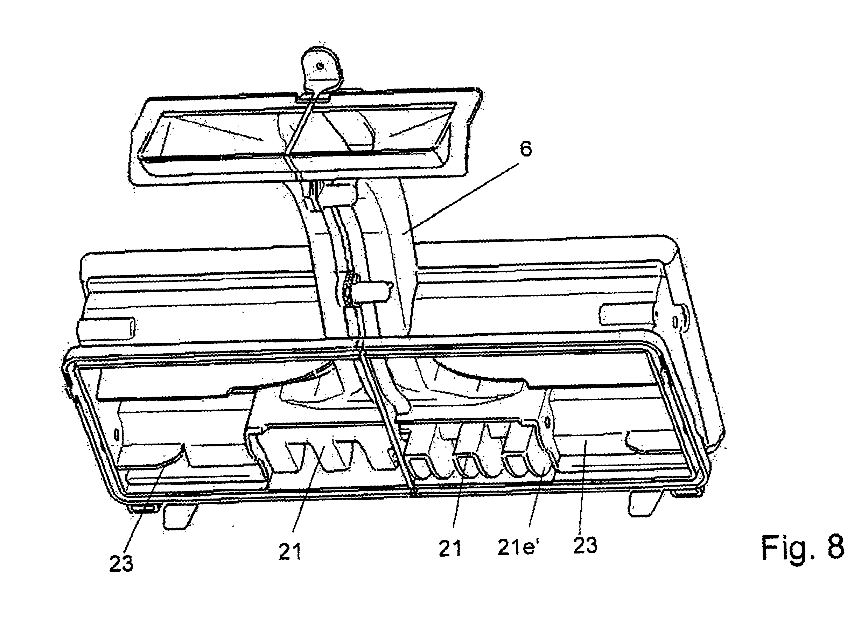

In den Figuren 7 bis 10 ist eine zweizonige Klimaanlage 1 mit einem als Kanalaufsatz 12 ausgebildeten Kaltluft-Bypass 6 gemäß einer Variante dargestellt. Auch im Falle dieser leicht abgewandelten Klimaanlage 1 wird die Kaltluft direkt nach dem Verdampfer (nicht dargestellt) über die gesamte Breite abgegriffen und über den vorliegend wiederum als Anbauteil ausgebildeten Kaltluft-Bypass 6, der durch eine in der Mittellängsebene verlaufende Trennwand in zwei spiegelbildlich ausgebildete Teile unterteilt ist, direkt zu einem Bereich kurz hinter dem Mischraum der Klimaanlage 1 geleitet, wo die Kaltluft der vom Mischraum kommenden, temperierten Luft und gemeinsam mit dieser über anschließende Luftkanäle dem Fahrzeuginnenraum zugeführt wird.

Im Unterschied zum zuvor beschriebenen Ausführungsbeispiel ist jedoch keine der Absperrung dienende Klappe 8 im Bereich des Lufteintritts in den Kaltluft-Bypass 6 vorgesehen. Ferner ist vorliegend die Einmündung des Kaltluftkanals vor der Klappe 11, direkt in den Verteiler- und Mischraum der Klimaanlage 1 vorgesehen. Die Regelung des Luftstrorns, der durch den Kaltluft-Bypass 6 strömt, erfolgt im vorliegenden Fall ausschließlich durch zwei am Ende des Kaltluft-Bypasses 6 angeordnete und je einem Teil desselben, d.h jeweils einer der beiden Zonen, zugeordnete Mischklappen 21, die in Figuren 11 und 12 im Detail dargestellt sind und an späterer Stelle näher erläutert werden. Ferner unterscheidet sich der Ort der Einmündung des Kaltluft-Bypasses 6 von dem des zuvor beschriebenen Ausführungsbeispiels.

Am als Anbauteil ausgebildeten Kanalaufsatz 12, der vorliegend auch den Kaltluft-Bypass 6 beinhaltet, sind auch vorstehend genannte Mischklappen 21 angeordnet. Ferner bildet der Kanalaufsatz 12 einen Teil des Luftkanals 13 zum Defrostaustritt, wobei die hierin angeordneten Defrostklappen 22 in Fig. 7 in geöffneter Stellung dargestellt sind.

Integriert in den Kanalaufsatz 12 zweigen ferner seitlich nach außen - ausgehend vom Kaltluft-Bypass 6 und verschließbar von den Mischklappen 21 - Kaltluft-Kanäle 23 zu den Luftkanälen, die zu den Seitendüsen führen, ab. D.h. nicht nur die beiden Mitteldüsen, also die fahrerseitige und die beifahrerseitige Mitteldüse, werden über den zentralen Kaltluft-Bypass 6 mit Kaltluft versorgt, sondem ein Teil der Luft wird zu den beiden Seitendüsen geleitet. Dabei erfolgt die Luftverteilung ― sowohl der Kaltluft vom Kaltluft-Bypass 6 als auch der temperierten Luft vom Mischraum der Klimaanlage 1 - auf Mittel- und Seitendüsen gleichmäßig, so dass bei der austretenden Luft kein oder zumindest kein wesentliches Temperaturgefälle in einer Zone, d.h. vorliegend zwischen den beiden Seiten des Fahrers beziehungsweise des Beifahrers auftritt.

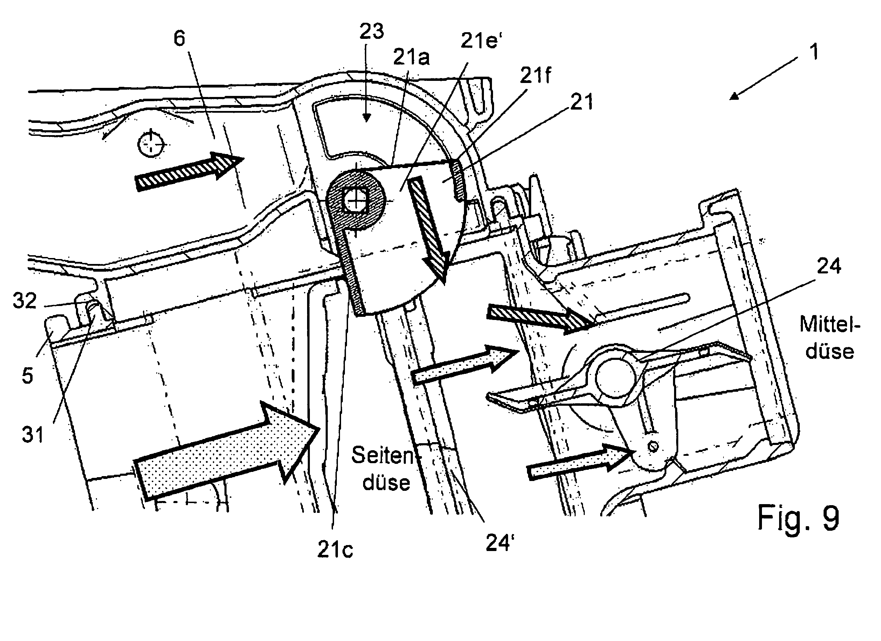

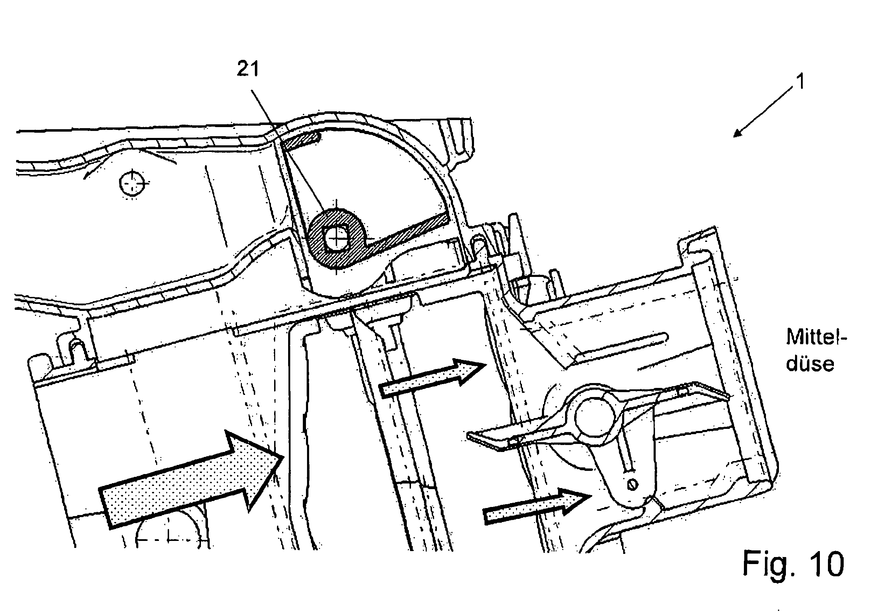

Wie aus Fig. 9 und 10 ersichtlich, mündet der Kaltluft-Bypass 6 in den Bereich des Verteiler- und Mischraums der Klimaanlage 1 direkt benachbart und in Luftströmungsrichtung vor Klappen 24, welche den Luftstrom zu den Mitteldüsen regeln, und vor Klappen 24' gelegen, welche den Luftstrom zu den Seitendüsen regeln, und nach der oben angeordneten Austrittsöffnung zu den Defrost-Austrittsöffnungen. Die Einstellung der Luftausströmrichtung und ob eine diffuse oder eine gerichtete Luftströmung aus den Düsen gewünscht wird, erfolgt auf an sich bekannte Weise direkt am Ausströmer (nicht dargestellt).

Ferner ermöglicht die vorstehend beschriebene und in der Zeichnung dargestellte Ausgestaltung die Absenkung der Luftaustrittstemperatur an den Mittel- und Seitendüsen auf eine Temperatur, die unter derjenigen der Defrost-Austrittsöffnungen liegt, was bei bestimmten Betriebsbedingungen vorteilhaft sein kann.

Die Mischklappen 21, im Folgenden auch nur als Klappen 21 bezeichnet, sind als Mischmodule in Bezug auf die den Mitteldüsen zugeführte Luft, nämlich durch den vom Mischraum der Klimaanlage kommenden Warmluftstrom und den durch den Kaltluft-Bypass 6 kommenden Kaltluftstrom, ausgebildet. In Folge des sehr kurzen Strömungsweges zu den Mitteldüsen sind im vorliegenden Fall Maßnahmen zur Vermischung der unterschiedlich temperierten Luftströme erforderlich, um keine Beeinträchtigung des Komforts im Fahrzeuginnenraum zu bewirken. Diese Maßnahmen zur Vermischung der unterschiedlichen Luftströme werden vorliegend durch eine Aufteilung des dem temperierten Luftstrom zuzuführenden Kaltluftstrom vom Kaltluft-Bypass 6 in drei Teilluftströme zum temperierten Luftstrom zur Mitteldüse und einem weiteren, der entsprechenden Seitendüse zuzuführenden Teilluftstrom. Natürlich kann die Aufteilung auch in mehr als drei Teilluftströme in Hinblick auf den der Mitteldüse zuzuführenden Teilluftstrom erfolgen.

Auf Grund des jeweils relativ langen Strömungsweges zu den Seitendüsen sind im vorliegenden Fall keine speziellen Maßnahmen erforderlich, um eine gleichmäßige Temperaturverteilung im Luftstrom am Luftaustritt der Seitendüsen zu erhalten. Die Vermischung erfolgt vielmehr im Laufe des Strömungsweges, unterstützt durch einen zumindest bereichsweise gekrümmten Strömungsverlauf. Prinzipiell ist jedoch auch eine Aufteilung des Kaltluftstroms und/oder des temperierten Luftstroms in Teilluftströme - entsprechend dem Kaltluftstrom zur Mitteldüse - möglich. Dahingegen ist der Strömungsweg zur jeweiligen Mitteldüse extrem kurz, so dass die Vermischung der Kalt- und Warmluft unterstützt werden muss, was vorliegend durch die spezielle Ausgestaltung der Mischklappen 21 erfolgt, jedoch prinzipiell auch durch eine andere in ihrer Funktion entsprechend ausgebildete Anordnung erfolgen kann.

Im Folgenden wird der Aufbau der Mischklappen 21, die in den Figuren 11 und 12 dargestellt sind, näher erläutert: Jede Mischklappe 21 weist eine erste, kaltluftanströmseitige Klappenfläche 21a mit drei Öffnungen 21b, welche die Einströmöffnungen für die Kaltluft vom Kaltluft-Bypass 6 in die Klappe 21 bilden, und in einem Winkel von ca. 90° versetzt hierzu eine zweite, zweimal unterbrochene, kaltluftabströmseitige Klappenfläche 21c auf. Die Öffnungen 21b in der ersten Klappenfläche 21a sind in endseitig offenen Kanälen 21d bis zur zweiten Klappenfläche 21c weitergeführt, wobei die Kanäle 21d in axialer Richtung der Klappe 21, also seitlich, durch sich in radialer Richtung erstreckende, kreissegmentartige Wände 21e begrenzt sind. In radialer Richtung bildet das Gehäuse die Begrenzung. Die einzelnen Wände 21e der Kanäle sind abwechselnd kaltluftabströmseitig und kaltluftanströmseitig miteinander verbunden, wobei die Verbindungsbereiche die zweite und die erste Klappenfläche 21 c bzw. 21 a bilden. In Umfangsrichtung sich über die gesamte Länge der Klappe 21 erstreckend ist ausgehend von der ersten, kaltluftanströmseitigen Klappenfläche 21a ein kurzer Rand 21f ausgebildet.

Wie aus Fig. 11 und 12 ersichtlich, ist die im zusammengebauten Zustand der Klimaanlage mittig angeordnete Wand 21e etwas beabstandet von der die beiden Zonen trennenden Trennwand angeordnet. Die andere äußere Wand 21e' der Klappe 21 ist Teil einer ebenen Fläche in Form eines Viertelkreises und liegt flächig an einer Gehäusewand an. In dieser Gehäusewand ist die Öffnung für den Kaltluftkanal 23 zur Seitendüse ausgebildet, so dass im geschlossenen Zustand der Klappe 21 auch diese Öffnung zum Kaltluftkanal 23 vollständig verdeckt ist. Die Öffnung weist hierbei eine etwa viertelskreisringförmige Gestalt auf, wobei der Außendurchmesser des Kreisrings etwas kleiner als der Außendurchmesser der äußeren Wand 21e' der Klappe 21 ist.

Wird die Klappe 21 geöffnet, so dass Kaltluft dem der Mitteldüse zugeführten temperierten Luftstrom vom Mischraum zugeführt wird, so wird gleichzeitig auch die Öffnung zum Kaltluftkanal 23 entsprechend weit freigegeben, und durch den Kanal gelangt nunmehr ebenfalls Kaltluft in den weiterführenden Luftkanal zur Seitendüse, der im Mischraum beginnt. Die Anbringung des Kaltluft-Bypasses 6 am Gehäuse 5 der Klimaanlage 1 erfolgt auf an sich bekannte Weise mittels Aufsetzen und Fixieren, wobei zur Positionierung und Abdichtung am Gehäuse außenseitig ein umlaufender Vorsprung 31 sowohl im Bereich des Abgriffs als auch im Bereich der Einleitung und am Kaltluft-Bypass 6 jeweils Endseitig eine umlaufende Nut 32 ausgebildet sind.

In der Nut 32 kann zusätzlich ein elastisch verformbares Dichtelement angeordnet sein. Die Fixierung der beiden Bauteile aneinander kann beispielsweise mittels Clipsverbindungen und/oder Schrauben erfolgen, wofür das Gehäuse 5 und der Kaltluft-Bypass 6 entsprechend ausgebildet sind.

Alternativ zur beschriebenen zweizonigen Klimaanlage kann auch eine einzonige Klimaanlage vorgesehen sein. In diesem Fall kann die Ausgestaltung entsprechend der zuvor beschriebenen Ausgestaltung erfolgen, jedoch sind die beiden Mischklappen 21 miteinander starr gekoppelt, so dass für die Betätigung nur ein Aktuator erforderlich ist. Die Koppelung kann auch über die Regelung erfolgen, d.h. die beiden Aktuatoren werden einander entsprechend geregelt. Ebenso kann auch eine durchgehende Mischklappe vorgesehen sein und die Trennwand des Kaltluft-Bypasses entfallen.

## Patentansprüche

1. Klimaanlage, insbesondere für ein Kraftfahrzeug, mit in einem Gehäuse (5), in welchem Luftkanäle (9) ausgebildet sind, und im Gehäuse (5) angeordnete Verdampfer (2) und Heizer (3), wobei ein mittels einer Klappe (21) geregelter Kaltluft-Bypass (6) vorgesehen ist, der nach dem Verdampfer (2) abzweigt und außerhalb des Gehäuses (5) der Klimaanlage verläuft, wobei die den Luftstrom durch den Kaltluft-Bypass (6) regelnde Klappe (21) am Ende des Kaltluft-Bypasses (6) angeordnet ist und den aus dem Kaltluft-Bypass (6) kommenden Luftstrom zumindest in vollständig geöffnetem Zustand der Klappe (21) in mehrere Teilluftströme aufteilt, **dadurch gekennzeichnet, dass** die Mischklappe (21) eine erste, kaltluftanströmseitige Klappenfläche (21a) mit Öffnungen (21b), welche die Einströmöffnungen für die Kaltluft vom Kaltluft-Bypass (6) in die Klappe (21) bilden, und in einem Winkel, insbesondere von 60° bis 120°, insbesondere von 90°, versetzt hierzu eine zweite, zweimal unterbrochene, kaltluftabströmseitige Klappenfläche (21c) aufweist, wobei die Öffnungen (21b) in der ersten Klappenfläche (21a) in endseitig offenen Kanälen (21d) bis zur zweiten Klappenfläche (21c) weitergeführt sind, die Kanäle (21d) in axialer Richtung der Klappe (21) durch sich in radialer Richtung erstreckende, kreissegimentartige Wände (21 e) begrenzt und in radialer Richtung das Gehäuse (5) die Begrenzung bildet.

2. Klimaanlage nach Anspruch 1, **dadurch gekennzeichnet, dass** die Klappe (21) an einer Einmündung des Kaltluft-Bypasses (6) in einen Verteiler- und Mischraum der Klimaanlage (1) angeordnet ist.

3. Klimaanlage nach Anspruch 2, **dadurch gekennzeichnet, dass** die Klappe (21) an einer Einmündung des Kaltluft-Bypasses (6) zwischen einem Defrostauslass und einem Belüftungsauslass, insbesondere zur Mittel- und/oder Seitendüse, angeordnet ist, wobei der Defrostauslass in normaler Strömungsrichtung der temperierten Luft vor dem Belüftungsauslass angeordnet ist.

4. Klimaanlage nach einem der vorhergehenden Ansprüche, **dadurch gekennzeichnet, dass** die Klappe (21) die am Ende des Kaltluft-Bypasses (6) angeordnet ist, die Kaltluft auf mehrere Luftaustritte geregelt verteilt, insbesondere auf die Mitteldüse und die Seitendüse des Fahrer- oder Beifahrerbereichs.

5. Klimaanlage nach einem der vorhergehenden Ansprüche **dadurch gekennzeichnet, dass** die Klappe (21) eine Wand (21e') aufweist, welche in geschlossener Stellung der Klappe (21) eine Öffnung (23) im Gehäuse (5) zu einem Luftkanal, insbesondere zu einer Seitendüse, verschließt und im geöffneter Stellung der Klappe (21) die Öffnung (23) freigibt.

6. Klimaanlage nach einem der vorhergehenden Ansprüche, **dadurch gekennzeichnet, dass** die Klappe (21) in geöffneter Stellung den Kaltluftstrom in mindestens zwei, insbesondere in drei, Teilluftströme unterteilt, welche dem Verteilter- und Mischraum der Klimaanlage (1) zugeführt werden, und welche aus demselben bei geöffneter Belüftunasklappe (24, 24') - gemeinsam mit temperierter Luft aus dem Verteilter- und Mischraum - in den entsprechenden, zum Fahrzeuginnenraum führtenden Luftkanal gelangen.

7. Klimaanlage nach einem der vorhergehenden Ansprüche, **dadurch gekennzeichnet, dass** ein geteilter Kaltluft-Bypass oder zwei Kaltluft-Bypässe (6) vorgesehen sind, wobei der eine Teil oder Kaltluft-Bypass (6) der Fahrerseite und der andere Teil oder Kaltluft-Bypass (6) der Beifahrerseite zugeordnet ist, und jeweils eine Klappe (21) zur Regelung des entsprechenden Kaltluftstroms vorgesehen ist.

8. Klimaanlage nach einem der vorhergehenden Ansprüche, **dadurch gekennzeichnet, dass** das Gehäuse (5) mit einem Kaltluft-Bypass (6) versehbar ist, der als separates Teil ausgebildet ist.

9. Klimaanlage nach Anspruch 8, **dadurch gekennzeichnet, dass** der Kaltluft-Bypass (6) auf der Außenweite des Gehäuses (5) anbringbar ist, wofür das Gehäuse (5) im Bereich zwischen Verdampfer (2) und Heizer (3) einen Auslass (7) aufweist.

## Claims

1. An air conditioning system, in particular for a motor vehicle, comprising an evaporator (2) and a heater (3) disposed in a housing (5) in which air ducts (9) are formed, and in the housing (5), wherein a cold air bypass (6) which can be regulated using a flap (21) is provided, the cold air bypass (6) branching after the evaporator (2) and extending outside of the housing (5) of the air conditioning system, wherein the flap (21), which regulates the air stream through the cold air bypass (6), is disposed at the end of the cold air bypass (6) and, at least in the completely-open state of the flap (21), distributes the air stream coming out of the cold air bypass (6) into a plurality of partial air streams, **characterized in that** the blending flap (21) includes a first, cold air inflow-side flap surface (21a) having openings (21b) that form the inflow openings for the cold air from the cold air bypass (6) into the flap (21) and, offset at an angle thereto, in particular at an angle of 60° to 120°, and of 90° in particular, a second flap surface (21c) that has two cold air outflow-side interruptions, wherein the openings (21 b) in the first flap surface (21 a) extend in open ducts (21d) on the end to the second flap surface (21c), the ducts (21d) being limited in the axial direction of the flap (21) by walls (21e) shaped as segments of a circle and extending in the radial direction, and forming the limit in the radial direction of the housing (5).

2. The air conditioning system according to claim 1, **characterized in that** the flap (21) is disposed at a transition of the cold air bypass (6) into a distribution and mixing chamber of the air conditioning system (1).

3. The air conditioning system according to claim 2, **characterized in that** the flap (21) is disposed at a transition of the cold air bypass (6) between a defrost outlet and a ventilation outlet, in particular to the middle nozzle and/or the side nozzle, wherein the defrost outlet is disposed in front of the ventilation outlet in the normal direction of flow of the conditioned air.

4. The air conditioning system according to one of the preceding claims, **characterized in that** the flap (21) that is disposed at the end of the cold air bypass (8) distributes the cold air among a plurality of air outlets in a regulated manner, in particular to the middle nozzle and the side nozzle on the driver's side or the passenger's side.

5. The air conditioning system according to one of the preceding claims, **characterized in that** the flap (21) includes a wall (21e') which, in the closed position of the flap (21), closes an opening (23) in the housing (5) to an air duct, in particular to a side nozzle and, in the opened position of the flap (21), opens the opening (23).

6. The air conditioning system according to one of the preceding claims, **characterized in that** the flap (21), in the opened position, subdivides the cold air stream into at least two, in particular three, partial air streams which are directed to the distribution and mixing chamber of the air conditioning system (1), and which, when the vent flap (24, 24') is open, exit the distribution and mixing chamber, together with conditioned air from the distribution and mixing chamber, and enter the corresponding air duct that leads to the vehicle interior.

7. The air conditioning system according to one of the preceding claims, **characterized in that** one divided cold air bypass or two cold air bypasses (6) are provided, wherein the one part or cold air bypass (6) is assigned to the driver's side, and the other part or cold air bypass (6) is assigned to the passenger's side, and each is provided with a flap (21) for regulating the corresponding cold air stream.

8. The air conditioning system according to one of the preceding claims, **characterized in that** the housing (5) can be provided with a cold air bypass (6) that is designed as a separate part.

9. The air conditioning system according to claim 8, **characterized in that** the cold air bypass (6) can be mounted on the exterior of the housing (5), the housing (5) being provided with an outlet (7) for this purpose between the evaporator (2) and the heater (3).

## Revendications

1. Système de climatisation, en particulier pour un véhicule automobile, comprenant des conduits d'air (9) qui sont configurés dans un carter (5), et un évaporateur (2) et un dispositif de chauffage (3) disposés dans le carter (5), où il est prévu une dérivation d'air froid (6) réglée au moyen d'un volet (21), dérivation d'air froid qui bifurque en aval de l'évaporateur (2) et s'étend à l'extérieur du carter (5) du système de climatisation, où le volet (21) régulant le flux d'air circulant à travers la dérivation d'air froid (6) est disposé au niveau de l'extrémité de la dérivation d'air froid (6) et, au moins lorsque le volet (21) est complètement ouvert, divise le flux d'air provenant de la dérivation d'air froid (6), en plusieurs flux d'air partiels,
**caractérisé en ce que** le volet mélangeur (21) présente une première surface de volet (21a) située côté arrivée d'air froid et comportant des ouvertures (21b) qui, dans le volet (21), forment les ouvertures d'entrée pour l'air froid provenant de la dérivation d'air froid (6) et, suivant un angle, en particulier de 60° à 120°, en particulier de 90°, de façon décalée par rapport à la première surface de volet, présente une deuxième surface de volet (21c) située côté sortie d'air froid et interrompue deux fois, où les ouvertures (21b) situées dans la première surface de volet (21a) se continuent jusqu'à la deuxième surface de volet (21c) dans des conduits (21d) ouverts, côté extrémité, lesdits conduits (21d) étant limités, dans le sens axial du volet (21), par des parois (21e) en forme de segments de cercle et s'étendant dans le sens radial, et le carter (5) forme la limitation dans le sens radial.

2. Système de climatisation selon la revendication 1, **caractérisé en ce que** le volet (21) est disposé, au niveau d'une entrée de la dérivation d'air froid (6), dans un espace de répartition et de mélange du système de climatisation (1).

3. Système de climatisation selon la revendication 2, **caractérisé en ce que** le volet (21) est disposé, au niveau d'une entrée de la dérivation d'air froid (6), entre une sortie de dégivrage et une sortie de ventilation, en particulier prévue pour la buse centrale et / ou latérale, où la sortie de dégivrage, dans la direction normale d'écoulement de l'air tempéré, est disposée en amont de la sortie de ventilation.

4. Système de climatisation selon l'une quelconque des revendications précédentes, **caractérisé en ce que** le volet (21) est disposé au niveau de l'extrémité de la dérivation d'air froid (6), volet qui distribue l'air froid, de façon régulée, à plusieurs sorties d'air, en particulier à la buse centrale et à la buse latérale de la zone conducteur ou passager.

5. Système de climatisation selon l'une quelconque des revendications précédentes, **caractérisé en ce que** le volet (21) présente une paroi (21e') qui, en position fermée du volet (21), ferme, dans le carter (5), une ouverture (23) prévue pour un conduit d'air, en particulier pour une buse latérale et, en position ouverte du volet (21), libère l'ouverture (23).

6. Système de climatisation selon l'une quelconque des revendications précédentes, **caractérisé en ce que** le volet (21), en position ouverte, subdivise le flux d'air froid en au moins deux, en particulier en trois flux d'air partiels qui sont fournis à l'espace de répartition et de mélange du système de climatisation (1) et qui, provenant de ce même espace de répartition et de mélange, lorsque le volet de ventilation (24, 24') est ouvert, parviennent, en même temps que de l'air tempéré provenant de l'espace de répartition et de mélange, dans le conduit d'air correspondant menant à l'habitacle du véhicule.

7. Système de climatisation selon l'une quelconque des revendications précédentes, **caractérisé en ce qu'**il est prévu une dérivation d'air froid divisée ou deux dérivations d'air froid (6), où la dérivation d'air froid (6) ou une de ses parties est associée au côté conducteur, la dérivation d'air froid (6) ou l'autre de ses parties étant associée au côté passager, et à chaque fois il est prévu un volet (21) servant à la régulation du flux d'air froid correspondant.

8. Système de climatisation selon l'une quelconque des revendications précédentes, **caractérisé en ce que** le carter (5) peut être doté d'une dérivation d'air froid (6) qui est configurée comme une partie distincte.

9. Système de climatisation selon la revendication 8, **caractérisé en ce que** la dérivation d'air froid (6) peut être positionnée sur le côté extérieur du carter (5), positionnement pour lequel le carter (5) présente une sortie (7) située dans la zone comprise entre l'évaporateur (2) et le dispositif de chauffage (3).
